# EUROPÄISCHE PATENTSCHRIFT

(11) **EP 1 516 245 B1**
(45) Veröffentlichungstag und Bekanntmachung des Hinweises auf die Patenterteilung: **24.08.2005**
(21) Anmeldenummer: 03760687.8
(22) Anmeldetag: 24.06.2003
(51) Int. Cl.: G06F 9/32, G06F 9/42, G06F 12/10, G06F 9/38

(54) **VORRICHTUNG UND VERFAHREN ZUM VERARBEITEN EINER SEQUENZ VON SPRUNGBEFEHLEN**
DEVICE AND METHOD FOR PROCESSING A SEQUENCE OF JUMP INSTRUCTIONS
DISPOSITIF ET PROCEDE POUR TRAITER UNE SEQUENCE D'INSTRUCTIONS DE SAUT

(30) Priorität: 24.06.2002 DE 10228151
(43) Veröffentlichungstag der Anmeldung: 23.03.2005
(73) Patentinhaber: Infineon Technologies AG, 81669 München (DE)
(72) Erfinder: RABE, Dirk, 81825 München (DE); SEDLAK, Holger, 82054 Sauerlach (DE)
(74) Vertreter: Schoppe, Fritz
(86) Internationale Anmeldenummer: PCT/EP2003/006625
(87) Internationale Veröffentlichungsnummer: WO 2004/001586

(56) Entgegenhaltungen:
- EP-A- 0 649 084
- US-A- 5 261 101
- "RETURN ADDRESS STACK CACHE" IBM TECHNICAL DISCLOSURE BULLETIN, IBM CORP. NEW YORK, US, Bd. 34, Nr. 11, 1. April 1992 (1992-04-01), Seiten 269-271, XP000303258 ISSN: 0018-8689

## Beschreibung

Die vorliegende Erfindung bezieht sich auf Mikroprozessoren und insbesondere auf Mikroprozessoren mit einem fest vorgegebenen logischen Adreßraum.

Obwohl die Entwicklung von Mikroprozessoren bzw. Mikrocontrollern zu erheblichen Leistungssteigerungen geführt hat, erhalten auf bestimmten technischen Anwendungsgebieten, wie z.B. im Chipkartenbereich oder bei SOC-Entwürfen, dennoch ältere CPU-Architekturen den Vorzug über neuere Architekturen bei der Integration einer CPU in eine integrierte Schaltung. Ein Grund hierfür besteht darin, daß neuere CPU-Architekturen mit einer höheren Leistungsfähigkeit häufig für das jeweilige vorgesehene Anwendungsgebiet überdimensioniert und somit in Hinblick auf die durchzuführenden Aufgaben zu viel Leistung benötigen und zu viel Chipfläche einnehmen. Ein weiterer Grund, eine ältere CPU-Architektur einer neueren, leistungsfähigeren vorzuziehen, besteht darin, daß die Softwareentwicklungsumgebung für die älteren CPU-Architekturen, wie z.B. die 8051- oder 8052-basierte Mikrocontrollerarchitektur, bei den Kunden häufig beliebter ist, und daß für dieselben mehr Softwareentwickler zur Verfügung stehen.

Das Problem der beim Kunden beliebteren Softwareentwicklungsumgebung für ältere Controller-Architekturen ist insbesondere im Chipkartenbereich bedeutend, da hier die Erzeugung der auf der Chipkarte abarbeitungsfähigen Maschinenprogramme bzw. der lauffähigen Maschinencodes nicht in das Aufgabengebiet des Chipherstellers fällt, sondern vielmehr aus Sicherheitsgründen den Großkunden, wie z.B. Banken, und deren Softwareentwicklungsfirmen sowie der jeweiligen Betriebssystementwicklungsfirma obliegt. Ferner ist es aufgrund der hohen benötigten Stückzahlen für die Chipkartenkunden von enormer Bedeutung, den jeweiligen Anforderungen angepaßte Chipkartencontroller zu verwenden, um die Kosten möglichst gering zu halten. Der Chipkartenhersteller muß folglich, sowohl um den Low-End-Chipkartenbereich zufrieden zu stellen, als auch um den Wunsch einiger Kunden nach bekannten Softwareentwicklungsumgebungen nachzukommen, Chipkarten anbieten können, die auf einer älteren Mikrocontrollerarchitektur basieren.

Ein Problem bei der Verwendung von älteren Controller-Architekturen bei der Chipkartenherstellung besteht jedoch darin, daß die Adressierungsmöglichkeiten derselben nicht ausreichend sind. So reicht im Chipkartenbereich zwar die Leistungsfähigkeit einer 8051-basierten CPU grundsätzlich aus, um die Verwaltungsaufgaben einer Chipkarte zu übernehmen, aber aus Gründen der hohen Sicherheitsanforderungen müssen auf der Chipkarte von Kryptocoprozessoren Kryptographiealgorithmen abgearbeitet werden, die Rechenoperationen bezüglich sehr großer Operanden umfassen. Bei dem bekannten RSA-(Rivest, Shamir und Adleman) Algorithmus sind beispielsweise Operandenlängen von 1024 üblich. Aufgrund dieser großen zu verarbeitenden Operandenlängen sowie der Komplexität der Kryptographiealgorithmen selbst, ist bei Chipkarten der Zugriff auf einen möglichst großen Speicher erforderlich. Das Problem bei der Verwendung von CPUs, die auf älteren Controllerarchitekturen bestehen, besteht hierbei darin, daß dieselben die Adressierung lediglich kleiner Speichergrößen zulassen. 8051-basierte CPUs ermöglichen beispielsweise lediglich die Adressierung von 64 kByte.

Ein möglicher Lösungsansatz, um trotz der Verwendung eines Controllers älterer Architektur einer großen Speicher adressierbar zu machen, besteht darin, extern gespeicherte Deskriptoren bzw. Basisadressen zu verwenden, die die Lage eines durch die CPU adressierten Speicherfensters festlegen, so daß der durch die CPU adressierbare Speicherbereich mittels des Speicherfensters über den gesamten größeren Speicher verschiebbar ist.

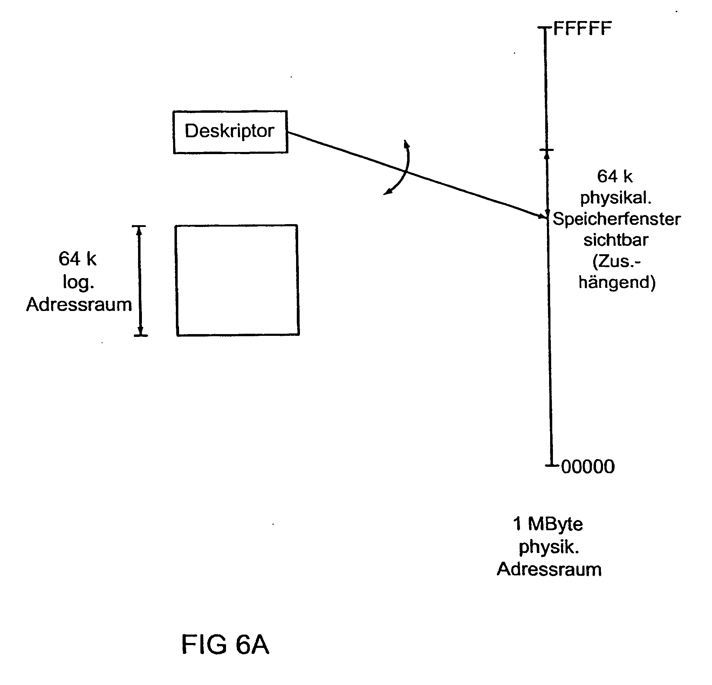

Zur näheren Erläuterung der Unterscheidung zwischen einem logischen Adreßraum und einem physikalischen Adreßraum wird nunmehr auf Fig. 6A Bezug genommen. Bei dem in Fig. 6A gezeigten Ausführungsbeispiel erstreckt sich der physikalische Adreßraum von einer Adresse "00000" bis zu einer Adresse "FFFFF". Der physikalische Adreßraum umfaßt somit 1 MByte. Es sei darauf hingewiesen, daß nicht unbedingt für jede physikalische Adresse des physikalischen Adreßraums tatsächlich ein physikalischer Speicher vorhanden sein muß. Vielmehr wird die überwiegende Anzahl von physikalischen Adressen auf keine physikalische Speicherzelle verweisen. Insbesondere bei Chipkarten ist man derzeit weit davon entfernt, 1 MByte vorzusehen. Typische Größen für derzeitige Chipkarten umfassen 64 kByte als EEPROM, 4 kByte als XRAM und 136 kByte als ROM. Die Flexibilität gebietet es jedoch, den physikalischen Adreßraum größer zu gestalten, um das weitere Nachrüsten von Speicherbausteinen je nach Anforderung und technischer Entwicklung zu ermöglichen.

Bekannte und ausgereifte Mikrocontroller-Architekturen auf der Basis des 8051-Standards unterstützen effizient den Zugriff auf insgesamt 64 kByte Daten und 64 kByte Code. Der logische Adreßraum des Mikrocontrollers umfaßt somit lediglich 64 kByte, wie es links in Fig. 6A dargestellt ist. Bei der Basis-8051-Architektur ist der Zugriff auf größere Speicherbereiche (Daten und Code) durch bekannte Konzepte langsam hinsichtlich der benötigten Taktzyklen, und in der Programmierung komplex und aufwendig, da zusätzliche Verwaltungscodes benötigt werden.

Zur Vereinfachung des Zugriffs auf einen größeren physikalischen Adreßraum wurde daher eine Speicherverwaltungseinheit (MMU) eingeführt, mit deren Hilfe der 64-kByte-Adreßraum, der auch als logischer Adreßraum bezeichnet wird, auf einen physikalischen Adreßraum von 1 MB umgemappt wird. Dieses Um-Mappen führt jedoch nicht dazu, daß der logische 64-kByte-Adreßraum vergrößert wird, sondern daß zu einem bestimmten Zeitpunkt zwar dennoch 64 kByte physikalische Adressen sichtbar sind, daß jedoch die tatsächlich sichtbaren 64 kByte Adressen veränderbar sind. Hierzu wird die MMU unter Verwendung eines Deskriptors umkonfiguriert. Der Deskriptor identifiziert einen bestimmten physikalischen Speicherbereich, der 64 kByte groß ist und bei dem in Fig. 6A gezeigten Beispiel zusammenhängend ist. Der Deskriptor ist beispielsweise die unterste Adresse des sichtbaren physikalischen Speicherbereichs, wobei dann die aktuelle physikalische Adresse durch die durch den Deskriptor bekannte Basisadresse und die logische Adresse als "Offset" ermittelt werden kann.

Zur Adressierung eines logischen Adreßraums mit einer Größe von 64 kByte werden Adressen mit einer Länge von 16 Bit, als 2 Bytes, benötigt.

Dagegen werden zur Adressierung eines physikalischen Adreßraums von 1 MByte physikalische Adressen mit einer Länge von 20 Bit benötigt. Nachdem zur Identifikation verschiedener physikalischer Speicherfenster mit einer Länge von 64 kByte die physikalischen Basisadressen lediglich in einem Raster von 64 kByte benötigt werden, ist ein Deskriptor mit einer Länge von acht Bit, also einem Byte, mehr als ausreichend, um sämtliche physikalischen Speicherfenster mit einer Größe von 64 kByte zu adressieren. Es sei darauf hingewiesen, daß als Deskriptor nicht unbedingt die obersten 8 Bit der physikalischen Basisadresse genommen werden müssen, sondern daß in einer MMU auch eine Tabelle abgespeichert werden kann, die als Eingangsinformation einen Deskriptor erhält und als Ausgangsinformation z. B. die obersten 8 Bits der physikalischen Basisadresse oder auch die physikalische Basisadresse in voller Länge je nach Anwendungsbeispiel ausgibt.

Oftmals ist es für bestimmte Bedürfnisse, wie z. B. bei Chipkarten, nicht günstig, einen physikalischen zusammenhängenden Speicherbereich zu haben, wie er in Fig. 6A dargestellt ist.

Statt dessen kann es für bestimmte Anforderungen wesentlich günstiger sein, z. B. 16 kByte des ROM zu sehen, 16 kByte XRAM zu sehen und 32 kByte im EEPROM zu sehen, jedoch an unterschiedlichen Stellen im EEPROM.

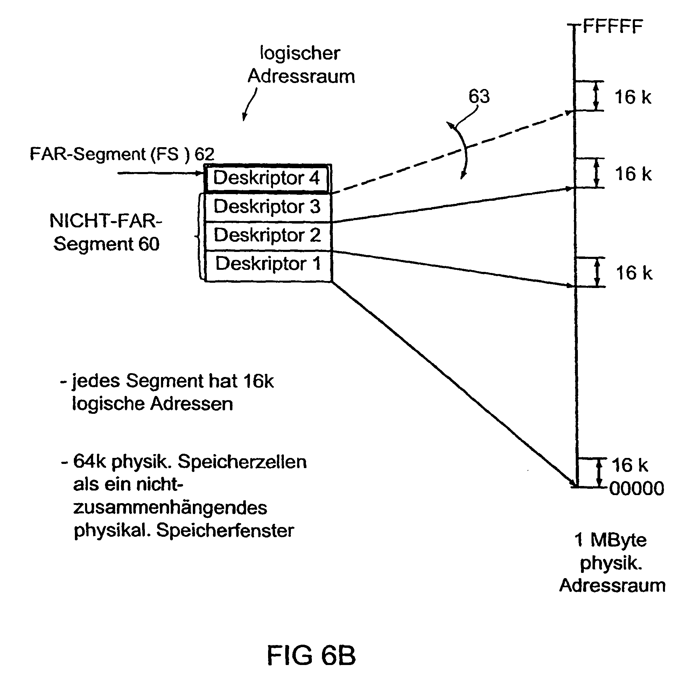

Zu diesem Zweck wird, wie es in Fig. 6B gezeigt ist, der logische Adreßraum in z. B. vier logische Adreßsegmente aufgeteilt, wobei jedem Adreßsegment ein Deskriptor zugeordnet ist, wie z. B. Deskriptor 1, Deskriptor 2, Deskriptor 3, Deskriptor 4. Eine logische Adresse im untersten Segment wird durch die Speicherverwaltungseinheit unter Verwendung des Deskriptors 1 in eine physikalische Adresse umgesetzt, die in dem 16-kByte-Bereich rechts in Fig. 6B liegt.

Eine logische Adresse in dem logischen Adreßraum, dem der Deskriptor 2 zugeordnet ist, wird in eine entsprechende physikalische Adresse im zweiten 16 kByte-Fenster des physikalischen Adreßraums umgesetzt. Analog hierzu wird mit einer logischen Adresse im dritten Segment, dem der Deskriptor 3 zugeordnet ist, umgegangen.

In Fig. 6B ist ferner ein viertes Segment des logischen Adreßraums eingezeichnet, das auch als Far-Segment FS bezeichnet wird. Dem Far-Segment ist ebenso wie den anderen drei Segmenten ein Deskriptor (Deskriptor 4) zugeordnet. Ist eine logische Adresse in dem Far-Segment vorhanden, so wird die derselben zugeordnete physikalische Adresse unter Verwendung des Deskriptors 4, der auch als Far-Deskriptor bezeichnet wird, und der logischen Adresse in dem Far-Segment ermittelt. Bei dem hier gezeigten Beispiel sind vereinbarungsgemäß die Deskriptoren 1 bis 3 auf fest vorgegebene Werte eingestellt, während lediglich der Deskriptor 4 variabel ist, wie es durch einen Pfeil in Fig. 6B dargestellt ist. Erfordert eine Sequenz von Befehlen, die durch den Mikroprozessor abgearbeitet wird, daß auf einen Speicherplatz zugegriffen wird, der nicht in den in Fig. 6B dargestellten vier Fenstern mit einer jeweiligen Größe von 16 kByte ist, so muß eine logische Adresse in dem Far-Segment (FS) zusammen mit einem geänderten Deskriptor 4 erzeugt werden, durch die eine MMU umkonfiguriert wird, so daß der Teil des physikalischen Speichers sichtbar wird, in dem sich der gerade benötigte Befehl befindet.

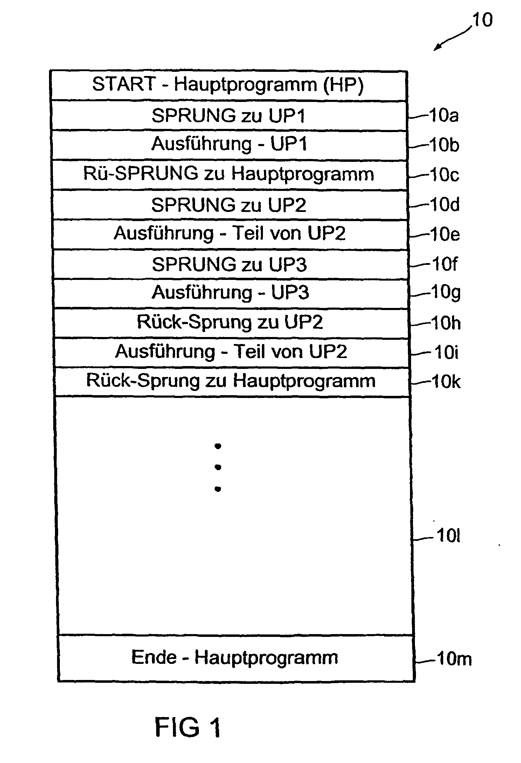

Im nachfolgenden wird auf Fig. 1 Bezug genommen, um die Vorgänge bei einem Hin-Sprung zu einem Unterprogramm und bei einem Rück-Sprung von dem Unterprogramm detaillierter darzustellen.

Fig. 1 zeigt eine Befehlssequenz 10, die beispielhaft ein Hauptprogramm (HP) und drei Unterprogramme (UP1, UP2 und UP3) umfaßt.

Das Hauptprogramm wird zunächst gestartet. Hierauf wird eine Sequenz von Befehlen des Hauptprogramms abgearbeitet, bis auf einen Befehl 10a gestoßen wird. Die Anweisung lautet, Sprung zum Unterprogramm 1 (UP1). Der Sprung wird ausgeführt, um dann, wie es bei 10b dargestellt ist, das Unterprogramm (UP1) auszuführen. Am Ende des Unterprogramms UP1 wird wieder, wie es bei 10c dargestellt ist, zum Hauptprogramm zurückgesprungen. Hierauf wird wieder das Hauptprogramm weiter abgearbeitet, bis zu einem Befehl 10d gekommen wird, der lautet "Sprung zum Unterprogramm 2 (UP2)". Hier liegt eine Verschachtelung vor, dahingehend, daß zunächst, wie es bei 10e dargestellt ist, ein Teil des Unterprogramms UP2 ausgeführt wird, daß dann nach Ausführung des Teils zu einem weiteren Unterprogramm UP3 gesprungen wird (10f). Dann wird das Unterprogramm UP3 vollständig ausgeführt (10g), und es wird wieder zum Unterprogramm UP2 zurückgesprungen (10h). Hierauf wird wieder ein Teil des Unterprogramms UP2 ausgeführt, nämlich der restliche Teil desselben (10i), um dann wieder zum Hauptprogramm zurückzuspringen (10k). Hierauf werden weitere Befehlssequenzen bzw. Befehls-Untersequenzen (Unterprogramme) ausgeführt, bis schließlich das Ende des Hauptprogramms (10m) erreicht wird.

Keine weiteren Probleme werden auftreten, wenn sich sowohl das Hauptprogramm als auch sämtliche Unterprogramme in dem zusammenhängenden physikalischen Speicherfenster von Fig. 6A oder in dem nicht-zusammenhängenden physikalischen Speicherfenster von Fig. 6B befinden. Der Aufruf eines Unterprogramms kann dann mit einem Befehl LCALL(logische Adresse) bewältigt werden, dahingehend, daß eine CPU, wenn sie beispielsweise auf den Befehl 10a stößt, das Argument des Befehls LCALL, also die logische Adresse des logischen Adreßraums, nimmt, an die MMU weiterleitet, woraufhin die MMU unter Verwendung des dem zusammenhängenden logischen Adreßraum zugeordneten Deskriptors (Fall von Fig. 6A) oder unter Verwendung des dem logischen Adreßsegment, in dem sich die logische Adresse befindet, zugeordneten Deskriptors (Fall von Fig. 6B) die entsprechende physikalische Adresse ermittelt. Von dieser physikalischen Adresse wird dann der nächste Befehl in der Sequenz, der dann der erste Befehl des Unterprogramms sein wird, abgerufen und ausgeführt.

Damit die CPU nach Ausführung des Unterprogramms wieder im Hauptprogramm weitermachen kann, also nach einem Rück-Sprungbefehl (10c von Fig. 1), werden Rücksprunginformationen gespeichert. Die Rücksprunginformationen sind in diesem Fall die logische Adressen, an der der nächste auszuführende Befehl des Hauptprogramms steht.

Analog hierzu werden auch verschachtelte Unterprogramme (Zeilen 10d bis 10k von Fig. 1) ausgeführt.

Existiert nicht die Situation, daß sich sämtliche Unterprogramme in dem gerade sichtbaren physikalischen Speicherfenster gespeichert befinden, wird ein Aufruf-Befehl FCALL(physikalische Adresse) verwendet. Die physikalische Adresse in dem Befehl FCALL wird ausgedrückt durch eine logische Adresse und einen Deskriptor. Empfängt die MMU den Befehl FCALL bzw. interpretiert dieselbe eine von der CPU kommenden Information als einen Befehl FCALL, so wird die MMU unter Verwendung des erhaltenen Deskriptors umkonfiguriert, um dann von der physikalischen Adresse, die nunmehr durch den veränderten Deskriptor im Speicherfenster ist, einen Befehl des Unterprogramms, wie z. B. des Unterprogramms 2 von Fig. 1, wiederzugewinnen und auszuführen.

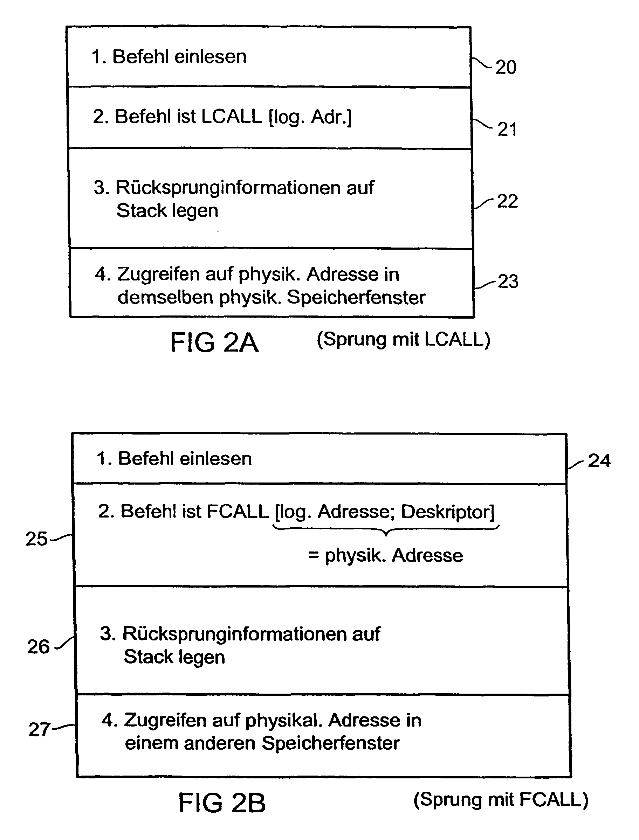

Zur Gewährleistung eines korrekten Rück-Sprungs nach Ausführung des Unterprogramms UP2 von Fig. 2 muß wieder eine Umkonfiguration der MMU durchgeführt werden, da die Befehle des Hauptprogramms in einem Speicherfenster stehen, das mit großer Wahrscheinlichkeit nicht mit dem Speicherfenster zusammenfällt, in dem das Unterprogramm UP2 sichtbar ist. Beim Ausführen von Unterprogrammen in nicht gemappten Speicherbereichen muß daher die MMU zunächst für den gewünschten Adreßbereich konfiguriert werden und nach Beendigung, also nach einem Rück-Sprungbefehl oder "return" wieder restauriert werden. Dieses Restaurieren der MMU wird gegenwärtig im Rahmen einer aktuellen Compiler/Linker-Lösung durch ein sogenanntes Banking-Konzept gelöst, das für jede mögliche Speicherbank, d. h. für jeden möglichen physikalischen Adreßbereich von Fig. 6A oder Fig. 6B, einen Code zum Einstellen und Rückeinstellen vorhält. Dieses Konzept kostet zusätzlichen CodeSpeicher im ständig sichtbaren logischen Speicher und ist aufwendig und kompliziert.

Beim Rücksprung eines durch FCALL angesprungenen Unterprogramms muß der MMU-Deskriptor des Far-Segments wiederhergestellt werden. Eine Möglichkeit der Realisierung dieser unterschiedlichen Return-Mechanismen ist die Vewendung von zwei unterschiedlichen Return-Befehlen, z. B. Ret für LCALL und FRet für FCALL. Ein Return-Befehl (Ret) ist ein einfacher Rücksprung), der keine Deskriptoränderung mit sich bringt, während der andere Return-Befehl ein Far-Return-Befehl ist, bei dem die MMU umkonfiguriert werden muß, und zwar auf den alten Deskriptor, also den Deskriptor, "von dem aus" ein ursprünglicher Sprung stattgefunden hatte.

US-A-5261101 beschreibt eine Vorrichtung zum Aufrufen und Rückkehren von einer Unterroutine, die entweder durch einen Nah-Aufruf oder einen Fern-Aufruf aufgerufen worden ist. Der Nah-Auruf-Befehl wird verwendet, wenn der Aufruf-Befehl und die aufgerufene Unterroutine im selben Speichersegment liegen.

Dieses Dokument beschreibt auch, daß jede Unterroutine mit einem Nah-Rücksprung-Befehl beendet werden kann. Jeder Codesegment, in dem eine Unterroutine angeordnet ist, erhält sowohl einen Nah-Eintritts-Punkt als auch einen Fern-Eintritts-Punkt, und einen Fern-Rücksprung-Befehl bei einem Offset von beispielsweise 0. Wird über einen Fern-Aufruf-Befehl in eine Unterroutine gesprungen, so geschieht dies über einen Fern-Eintritts-Punkt. Ein weiterer Offset von 0 wird aufgrund eines an diesem Fern-Eintritts-Punkt stehenden zusätzlichen Befehls Push auf den Stack gelegt. Wenn der Prozessor am Ende einer Unterroutine einem Nah-Rücksprung-Befehl begegnet, dann holt er von dem Stack einen Offset, der den Prozessor in dem FernSegment auf den Offset 0 verweist. An diesem Offset steht dann der Fern-Rücksprung-Befehl, so daß der Prozessor vom Stack sowohl das Segment als auch den Offset wiedergewinnt, um dann zu dem richtigen Segment zu springen.

Nachteilig an diesem Konzept ist insbesondere die Verwendung zweier unterschiedlicher Return-Befehle, da diese Befehle Eingriffe in die Unterprogramme erfordern. Typischerweise wird jedes Unterprogramm mit einem Return-Befehl abgeschlossen. Unterprogramme existieren jedoch bereits als vorgefertigte Software-Komponenten, in die ungern eingegriffen wird, oder in die seitens eines beispielsweise Chipkartenherstellers überhaupt nicht eingegriffen werden kann. Aus Sicherheitsgründen ist es nämlich oftmals so, daß der Chipkartenhersteller lediglich die Hardware samt Spezifikation liefert, und daß die tatsächlichen Unterprogramme, wie z. B. kryptographische Programme etc., von dem Anwender erstellt und auf die Chipkarte geladen werden. Dies bedeutet in anderen Worten, daß oftmals insbesondere bei sicherheitsrelevanten Anwendungen der Chipkartenhersteller selbst keinen Zugriff auf die Unterprogramme hat oder haben soll, um beispielsweise die Return-Befehle der einzelnen Unterprogramme von Fall zu Fall in Far-Return-Befehle oder einfache Return-Befehle zu modifizieren.

Ein ergänzender Grund für die Verwendung eines Return-Befehls für beide Optionen ist, daß ein Softwareprogramm sowohl mit FCALL als auch mit LCALL angesprungen werden kann (je nach aktueller Sichtbarkeit).

Eine solche Vorgehensweise würde daher, sofern sie überhaupt möglich ist, zu erhöhtem Aufwand (Kosten) und damit einhergehender erhöhter Fehleranfälligkeit führen.

Die Aufgabe der vorliegenden Erfindung besteht darin, ein einfacheres Konzept zum Verarbeiten einer Sequenz von Befehlen zu schaffen.

Diese Aufgabe wird durch eine Vorrichtung zum Verarbeiten einer Sequenz von Befehlen nach Patentanspruch 1 oder durch ein Verfahren zum Verarbeiten einer Sequenz von Befehlen nach Patentanspruch 17 gelöst.

Der vorliegenden Erfindung liegt die Erkenntnis zugrunde, daß eine Verwendung eines einzigen Return-Befehls sowohl für einen ersten Hin-Sprungbefehl ohne Deskriptorenänderung (LCALL) als auch für einen zweiten Hin-Sprungbefehl mit Deskriptorenänderungen (FCALL) dadurch ermöglicht wird, daß je nach Hin-Sprungbefehl unterschiedliche Rücksprunginformationen bestimmt und gespeichert werden.

Bei einem Rück-Sprung wird dann standardmäßig eine vorgegebenen Menge an Rücksprunginformationen typischerweise von einem Stapel-Speicher oder Stack von einem Prozessor genommen und decodiert, um festzustellen, ob beim Hin-Sprung, zu dem der untersuchte Rück-Sprung gehört, eine Deskriptorenänderung vorgenommen worden ist oder nicht. Wurde beim Decodieren herausgefunden, daß keine Deskriptorenänderung vorgenommen worden ist, so wird eine vorbestimmte Menge an Rücksprunginformationen als einfache logische Rück-Sprungadresse interpretiert.

Wurde dagegen herausgefunden, daß dem aktuellen Rück-Sprung ein Hin-Sprung mit Deskriptorenänderung vorausging, so wird eine weitere Menge an Rücksprunginformationen abgerufen, um dann den entsprechenden Rück-Sprung-Deskriptor zu ermitteln, derart, daß die korrekte physikalische Adresse eines Befehls gefunden wird, der Teil des Unterprogramms oder Hauptprogramms ist, das Ziel des Rück-Sprungs ist.

Bei einem ersten bevorzugten Ausführungsbeispiel der vorliegenden Erfindung wird für jeden Hin-Sprung ohne Deskriptorenänderung unabhängig davon, aus welchem logischen Segment in welches logische Segment gesprungen wird, eine vorbestimmte Menge an Rücksprunginformationen, wie z. B. zwei Byte, gespeichert, wobei diese zwei Byte die logische Adresse darstellen, mittels der in dem Zielprogramm des Rück-Sprungs weitergemacht werden kann.

Im Falle eines Hin-Sprungbefehls mit Deskriptorenänderung wird immer, unabhängig davon, von welchem Segment in welches Segment gesprungen wird, neben der vorbestimmten Menge an Rücksprunginformationen eine weitere Menge an Rücksprunginformationen gespeichert, wie z. B. weitere zwei Byte. Die vier Byte insgesamte Rücksprunginformationen umfassen einen Fensterwechselindikator oder Far-Return-Indikator von z. B. einem Byte, den Deskriptor für das Rück-Sprung-Ziel sowie eine logische Adresse.

Dieses Ausführungsbeispiel ist dahingehend vorteilhaft, daß bei Sprüngen innerhalb des Speicherfensters nach wie vor lediglich ein Stackverbrauch von zwei Byte stattfindet.

Bei einem zweiten Ausführungsbeispiel der vorliegenden Erfindung wird die Hin-Spungbefehls-Decodierung auf der Basis der logischen Adresse, die der vorbestimmten Menge an Rücksprunginformationen entspricht und standardmäßig bei einem Rück-Sprung-Befehl abgerufen wird, durchgeführt. Ist diese logische Adresse eine logische Adresse im Far-Segment (FS), so werden weitere Rück-Sprung-Informationen abgerufen. Für Hin-Sprungbefehle aus dem Far-Segment des logischen Adreßraums werden dann lediglich drei Byte an Rücksprunginformationen benötigt, also ein Byte weniger als im ersten Ausführungsbeispiel. Für einen Hin-Sprungbefehl mit dem Far-Segment als Ziel und mit dem Befehl FCALL werden dagegen vier Bytes benötigt, die einen Far-Return-Indikator, d. h. einen Fensterwechselindikator, umfassen. Nachdem der Fensterwechselindikator in der vorbestimmten Menge an Rücksprunginformationen enthalten ist, kann auch hier unter Verwendung eines einzigen Return-Befehls eine korrekte Berechnung der physikalischen Adresse des nächsten einzulesenden Befehls durchgeführt werden.

Die vorliegende Erfindung ist dahingehend vorteilhaft, daß unabhängig davon, ob ein Befehl ohne Deskriptorenwechsel (LCALL) oder ein Befehl mit Deskriptorenwechsel (FCALL) verwendet wird, mit ein und demselben Return-Befehl gearbeitet werden kann. Die Unterscheidung, wie viel Rücksprunginformationen benötigt werden, um entweder in demselben physikalischen Speicherfenster zu bleiben oder eine Restauration auf ein vor dem Rück-Sprung vorhandenes Speicherfenster durchzuführen, werden allein durch Decodierung der Rücksprunginformationen selbst, also des Stack-Inhalts, der wie üblich als Zuletzt-Hinein-Zuerst-Heraus-Speicher ausgeführt ist, durchgeführt.

Damit sind keine aufwendigen, fehleranfälligen und komplizierten Überarbeitungen der Unterprogramme entweder im Compiler/Linker oder im Quellcode selbst nötig, so daß bereits bestehende Unterprogramme ohne Modifikation weiterverwendet werden können.

Bevorzugte Ausführungsbeispiele der vorliegenden Erfindung werden nachfolgend Bezug nehmend auf die beiliegenden Zeichnungen detailliert erläutert. Es zeigen:
- Fig. 1: eine beispielhafte Sequenz von Befehlen;
- Fig. 2a: eine Ablaufsequenz bei einem Sprung mit LCALL;
- Fig. 2b: eine Ablaufsequenz bei einem Sprung mit FCALL;
- Fig. 3: ein Ablaufdiagramm für einen Rück-Sprung;
- Fig. 4: eine tabellarische Darstellung der Rücksprunginformationen gemäß einem ersten Ausführungsbeispiel der vorliegenden Erfindung;
- Fig. 5: eine tabellarische Darstellung der Rücksprunginformationen gemäß einem zweiten Ausführungsbeispiel der vorliegenden Erfindung;
- Fig. 6A: eine schematische Darstellung eines zusammenhängenden physikalischen Speicherfensters;
- Fig. 6B: eine schematische Darstellung eines nichtzusammenhängenden physikalischen Speicherfensters;
- Fig. 7: ein Blockdiagramm der erfindungsgemäßen Vorrichtung zum Verarbeiten einer Sequenz von Befehlen; und
- Fig. 8: eine schematische Darstellung eines Stacks mit verschiedenen Rücksprunginformationen.

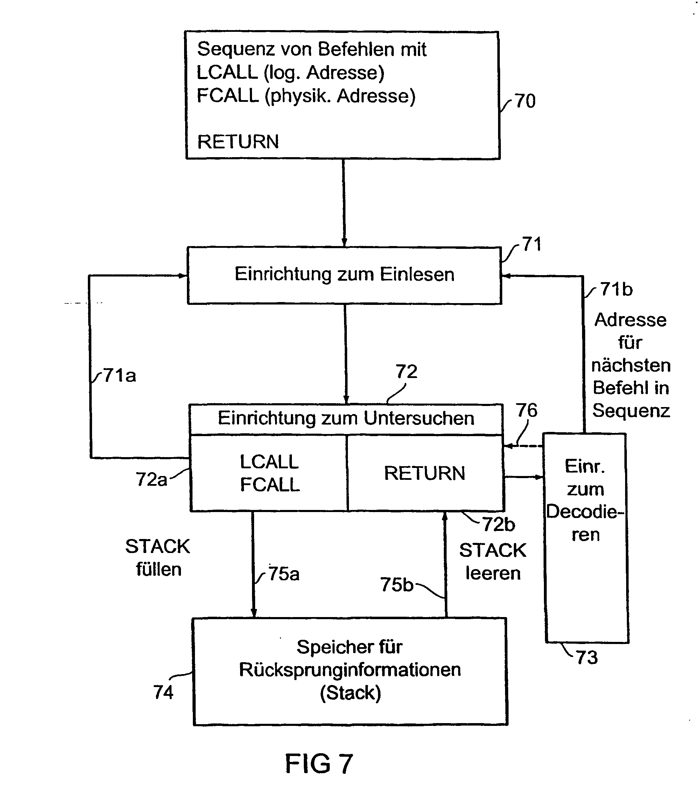

Fig. 7 zeigt eine erfindungsgemäße Vorrichtung zum Verarbeiten einer Sequenz von Befehlen, wie sie beispielsweise in einem Mikroprozessor implementiert sein kann. Eine Sequenz von Befehlen 70 umfaßt Befehle, die an unterschiedlichen Speicheradressen in einem physikalischen Adreßraum gespeichert sind. Insbesondere ist der logische Adreßraum durch eine vorbestimmte Anzahl von logischen Adressen adressierbar, wobei der physikalische Adreßraum größer als der logische Adreßraum ist. Die Sequenz 70 von Befehlen umfaßt ferner einen ersten Hin-Sprungbefehl (LCALL), der Informationen über eine logische Adresse umfaßt, um einen Befehl zu adressieren, der in einem durch den logischen Adreßraum definierten physikalischen Speicherfenster positioniert ist. Ferner ist ein zweiter Hin-Sprungbefehl (FCALL) vorgesehen, der Informationen über eine physikalischen Adresse umfaßt, um einen Befehl zu adressieren, der außerhalb des durch den logischen Adreßraum definierten physikalischen Speicherfensters positioniert ist. Ferner ist ein gemeinsamer Rück-Sprungbefehl (Return) vorgesehen, um eine durch den ersten oder den zweiten Hin-Sprungbefehl begonnene Untersequenz von Befehlen (UP1, UP2, UP3) zu beenden. Die erfindungsgemäße Vorrichtung umfaßt eine Einrichtung 71 zum Einlesen eines Befehls der Befehlssequenz 70. Der eingelesene Befehl wird einer Einrichtung 72 zum Untersuchen des Befehls zugeführt. Die Einrichtung 72 ist ausgebildet, um eine Unterscheidung dahingehend durchzuführen, ob ein erster oder zweiter Hin-Sprungbefehl vorliegt (72a), oder ob ein Rück-Sprung-Befehl vorliegt (72b). Stellt die Einrichtung 72 fest, daß ein erster Hin-Sprungbefehl (LCALL) vorliegt, so ist sie ausgebildet, um erste Rücksprunginformationen zu bestimmen und zu speichern, die sich auf einen gerade aktuellen logischen Adreßraum beziehen. Stellt die Einrichtung 72 zum Untersuchen dagegen fest, daß ein zweiter Hin-Sprungbefehl (FCALL) vorliegt, so ist sie ausgebildet, um zweite Rücksprunginformationen zu bestimmen und zu speichern, die sich auf ein gerade aktuelles physikalisches Speicherfenster beziehen. Stellt die Einrichtung 72 zum Untersuchen dagegen fest, daß der eingelesene Befehl ein Rück-Sprung-Befehl ist (72b), so wird eine Einrichtung 73 zum Decodieren aktiviert, um eine Adresse für den nächsten Befehl in der Sequenz zu ermitteln und der Einrichtung 71 zuzuführen.

Wie es in Fig. 7 gezeigt ist, ist bei einem bevorzugten Ausführungsbeispiel der vorliegenden Erfindung ein Speicher 74 für Rücksprunginformationen vorgesehen. Der Speicher wird in Fachkreisen als "Stack" bezeichnet. Die Einrichtung 72 zum Untersuchen ist im Falle des Vorliegens eines Hin-Sprungbefehls (72a) ausgebildet, um den Stack 74 zu füllen (75a), oder im Falle des Vorliegens eines Rück-Sprungbefehls (72b) ausgebildet, um den Stack zu leeren (75b).

Insbesondere ist die Einrichtung 72 zum Untersuchen ausgebildet, um im Falle des Vorliegens eines Rück-Sprungbefehls (72b) eine vorbestimmte Menge, wie z. B. 2 Bytes der gespeicherten Rücksprunginformationen auf jeden Fall wiederzugewinnen. Die wiedergewonnene vorbestimmte Menge an Rücksprunginformationen wird der Einrichtung 73 zum Decodieren zugeführt, damit dieselbe feststellt, ob die vorbestimmte Menge an Rücksprunginformationen auf eine logische Adresse in dem aktuellen physikalischen Speicherfenster hinweist, oder ob die vorbestimmte Menge einen Hinweis auf eine physikalische Adresse außerhalb des aktuellen physikalischen Speicherfensters umfaßt. Im letzteren Fall ist die Einrichtung 73 zum Decodieren ausgebildet, um die Einrichtung 72 zum Untersuchen erneut zu aktivieren, wie es durch eine Steuerleitung 76 in Fig. 7 angedeutet ist, damit dieselbe eine weitere Menge der gespeicherten Rücksprunginformationen von dem Stack 74 wiedergewinnt, um die physikalische Adresse außerhalb des aktuellen physikalischen Speicherfensters zu identifizieren.

Bevor detailliert auf die Ausgestaltung der Einrichtung 72 zum Untersuchen eingegangen wird, damit dieselbe den Speicher mit Rücksprunginformationen füllt (75a) oder den Speicher durch Einlesen von Rücksprunginformationen leert (75b), wird zunächst anhand der Fig. 2a, 2b die Schrittsequenz dargestellt, die auftritt, wenn ein Mikroprozessor einen Befehl einliest, bis er schließlich auf eine physikalische Adresse zugreift.

Die Einrichtung 71 von Fig. 7 ist zunächst aktiv, um einen Befehl einzulesen (20). Hierauf stellt die Einrichtung 72 von Fig. 7 fest, daß der Befehl der erste Hin-Sprungbefehl LCALL ist, der als Argument die logische Adresse aufweist, an der - bezogen auf das aktuelle Speicherfenster - der nächste Befehl in der Befehlssequenz gespeichert ist (21). Ferner ist die Einrichtung 72 aktiv, um den Stack zu füllen (75a), d. h. um Rücksprunginformationen auf den Stack zu legen (22), die benötigt werden, wenn das Unterprogramm, das mit LCALL aufgerufen worden ist, wieder beendet ist. Schließlich aktiviert die Einrichtung 72 über eine Aktivierungsleitung 71a die Einrichtung 71 zum Einlesen, um auf die physikalische Adresse in demselben physikalischen Speicherfenster zuzugreifen, die durch die logische Adresse von Schritt 21 von Fig. 2a und dem aktuell vorherrschenden Deskriptor identifiziert ist (23).

In ähnlicher Weise wird ein Befehl FCALL abgearbeitet, wie es in Fig. 2b zu sehen ist. Zunächst wird ein Befehl durch die Einrichtung 71 von Fig. 7 eingelesen (24). Dann stellt die Einrichtung 72 zum Untersuchen fest, daß der Befehl ein Befehl FCALL ist. Der Befehl FCALL umfaßt als Argument die logische Adresse sowie einen Deskriptor, welche zusammen eine physikalische Adresse definieren, die mit großer Wahrscheinlichkeit in einem anderen als dem aktuell vorherrschenden Speicherfenster ist.

Wie es Bezug nehmend auf Fig. 7 beschrieben worden ist, ist die Einrichtung 72 in diesem Fall ferner aktiv, um Rücksprunginformationen zu ermitteln und auf den Stack zu legen (26). Die Rücksprunginformationen stellen sicher, daß nach einer Abarbeitung des Unterprogramms, das mit FCALL aufgerufen worden ist, das Programm, aus dem das Unterprogramm aufgerufen worden ist, korrekt fortgesetzt werden kann.

Nach dem Füllen des Stacks (75a in Fig. 7) wird dann wieder die Einrichtung 71 zum Einlesen über die Leitung 71a aktiviert, um auf die physikalische Adresse in einem anderen, durch den im Schritt 25 erhaltenen Deskriptor bestimmten Speicherfenster zuzugreifen (27).

Bei einem bevorzugten Ausführungsbeispiel der vorliegenden Erfindung umfaßt die Einrichtung 71 zum Einlesen eine MMU (MMU = Memory Management Unit = Speicherverwaltungseinheit), in der ein Deskriptorfeld durch den von dem Befehl FCALL erhaltenen Deskriptor (Schritt 25) aktualisiert wird, um das sichtbare physikalische Speicherfenster entsprechend zu ändern.

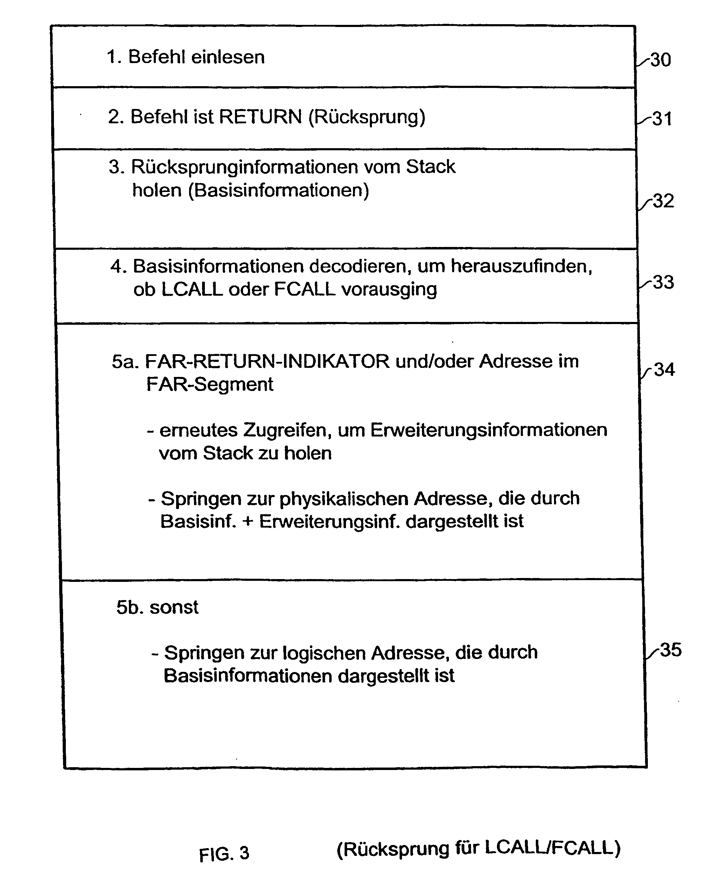

Fig. 3 zeigt eine Ablaufsequenz der in Fig. 7 gezeigten Vorrichtung mit Schwerpunkt auf den Fall, bei dem die Einrichtung 72 feststellt, daß ein Rück-Sprungbefehl (Return) eingelesen worden ist. Zunächst wird wieder durch die Einrichtung 71 ein Befehl eingelesen (30). Dann stellt die Einrichtung 72 zum Untersuchen fest, daß der Befehl ein Rück-Sprung-Befehl ist (31). Hierauf wird die Leitung 75b aktiviert, um Rücksprunginformationen von dem Speicher 74 zu holen (32). Insbesondere wird eine vorbestimmte Menge von Rücksprunginformationen, die auch als Basisinformationen bezeichnet werden, unabhängig davon, ob dem Rück-Sprungbefehl ein erster oder zweiter Hin-Sprungbefehl vorausgegangen ist, abgerufen. Dies stellt sicher, daß keine inneren Eingriffe in eine bestehende Mikroprozessorarchitektur erforderlich sind. Bei einer solchen Architektur ist der Prozessor ausgebildet, um immer, wenn ein Rück-Sprung erfaßt wird, eine vorbestimmte Menge von Informationen von dem Stack zu holen. Bei einem Prozessor, der Adressen mit einer Länge von 16 Bit (2 Byte) hat, also einem Prozessor, der einen Speicher von 64 kByte bzw. einen logischen Adreßraum von 64 kByte adressieren kann, sind dies 16 Bit bzw. 2 Byte. Diese 2 Byte werden im Schritt 32 also immer vom Stack geholt.

In einem Schritt 33 wird die Einrichtung 73 zum Decodieren der Basisinformationen aktiviert, um allgemein gesagt herauszufinden, ob ein Aufruf mit LCALL oder mit FCALL vorausgegangen ist. Insbesondere werden die Basisinformationen decodiert, um herauszufinden, ob vom Stack weitere Informationen geholt werden sollen oder nicht. Es sei darauf hingewiesen, daß der Stack nicht in der Lage ist, aktiv zu signalisieren, wie viele Informationen zu einem Rück-Sprung gehören. Dies ist aufgrund der bestehenden Prozessorarchitektur der Fall, da dort als Rücksprunginformationen immer nur 2 Byte benötigt werden, nämlich die logische Adresse, mit der der Prozessor nach dem Rück-Sprung die Sequenz von Befehlen weiter abarbeitet. Der Stack selbst ist also nicht in der Lage, der in Fig. 7 mit 76 bezeichneten Einrichtung zum Untersuchen mitzuteilen, wie viel Rücksprunginformationen, d. h. wie viel Bytes, vom Stack zu holen sind.

Wie es später detaillierter dargelegt wird, enthalten die 2 Bytes, die die Einrichtung zum Untersuchen standardmäßig abruft, im Falle eines FCALL-Befehls und manchmal auch im Falle eines LCALL-Befehls einen Hinweis darauf, daß zur korrekten Bestimmung der Rück-Sprung-Adresse mehr Informationen als die Basisinformationen benötigt werden.

Insbesondere ist die Einrichtung 73 zum Decodieren ausgebildet, um bei einem ersten bevorzugten Ausführungsbeispiel in den Basisinformationen einen Far-Return-Indikator, d. h. den Fensterwechselindikator, zu finden. Bei einem anderen Ausführungsbeispiel stellen die Basisinformationen eine logische Adresse dar, die dann, wenn sie im Far-Segment (Fig. 6B) liegt, der Einrichtung 73 zum Decodieren anzeigt, daß Erweiterungsinformationen benötigt werden. Stellt die Einrichtung 73 zum Decodieren also etwas derartiges fest, so greift sie erneut auf den Speicher 74 zu, um sogenannte Erweiterungsinformationen vom Stack zu holen, die dann - zusammen mit den Basisinformationen - die korrekte physikalische Adresse ergeben, an die zum Einlesen des nächsten Befehls der Sequenz gesprungen werden muß (71 von Fig. 7).

Stellt die Einrichtung 73 zum Decodieren fest, daß die Basisinformationen keine solchen Indizien umfassen, so wird, wie es in Fig. 3 bei 35 gezeigt ist, zur logischen Adresse gesprungen, die durch die Basisinformationen dargestellt ist. Es findet kein Speicherfensterwechsel statt, d. h. es muß keine Umkonfiguration der MMU mit einem neuen Deskriptor oder etwas ähnliches stattfinden.

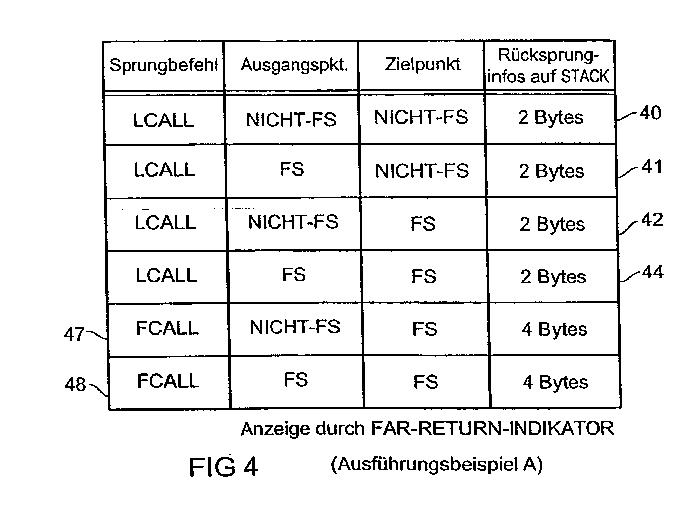

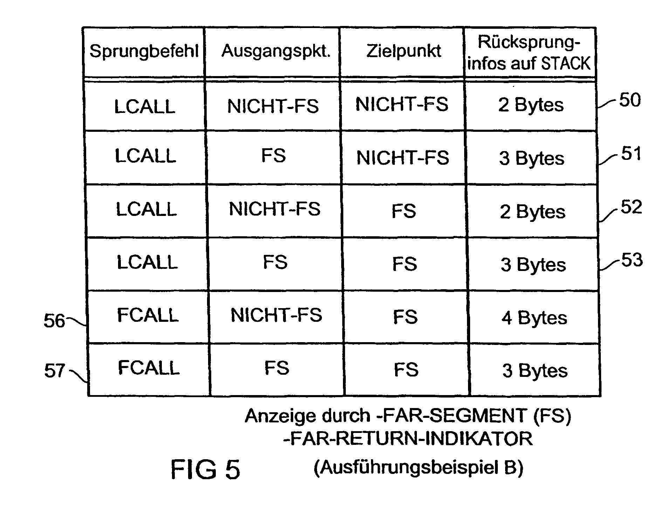

Im nachfolgenden werden anhand der Fig. 4 und 5 zwei bevorzugte Ausführungsbeispiele der vorliegenden Erfindung detaillierter dargestellt, die sich auf das in Fig. 6B gezeigte Szenario beziehen, bei dem der logische Adreßraum in Nicht-Far-Segmente 60 und ein Far-Segment 62 aufgeteilt ist. Vereinbarungsgemäß sind die Deskriptoren 1, 2 und 3 fest, d. h. die entsprechenden 16-kB-Speicherfenster sind immer fest. Um jedoch auf den gesamten physikalischen Adreßraum zugreifen zu können, ist der Deskriptor 4 des Far-Segments 62 variabel, wie es durch einen Pfeil 63 dargestellt ist. Durch Verändern des Deskriptors 4 auf eine beliebige Basisadresse des dem Deskriptor 4 zugeordneten 16-kB-Speicherfensters kann auf jede physikalische Adresse im physikalischen Adreßraum zugegriffen werden. Bei dem in Fig. 4 gezeigten ersten Ausführungsbeispiel (Ausführungsbeispiel A) enthalten die Rücksprunginformationen, wenn ein Fensterwechsel betroffen ist, einen sogenannten Far-Return-Indikator bzw. einen Fensterwechselindikator. Der Far-Return-Indikator hat eine Länge von 1 Byte und entspricht somit einem logischen Adreßraum von 256 Byte. Dieser logische Adreßraum von 256 Byte wird reserviert, dahingehend, daß auf diesen Bereich keine Code-Rücksprünge erfolgen werden. Insbesondere ist der Far-Return-Indikator das High-Adress-Byte der 256 reservierten Bytes.

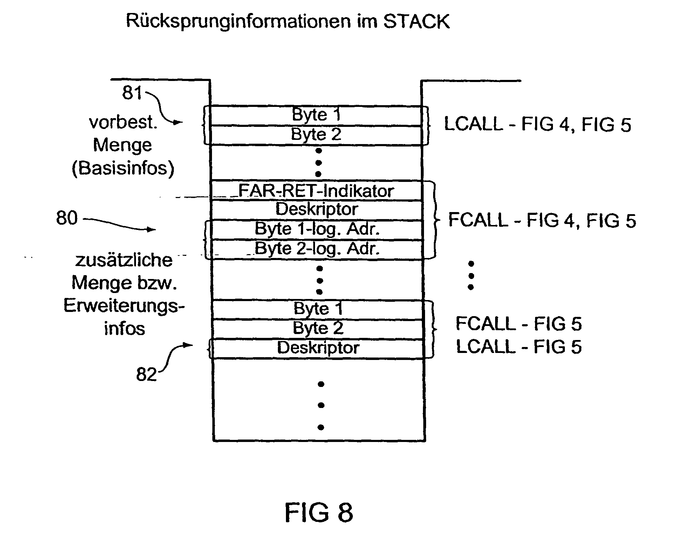

Neben dem Far-Return-Indikator werden im Falle des zweiten Hin-Sprungbefehls FCALL folgende weiteren Rücksprunginformationen erzeugt und auf den Stack gelegt. Zum einen die MMU-Basis-Adresse oder Banknummer bzw. die Deskriptorinformation, also Bezug nehmend auf Fig. 6B der Deskriptor 4. Schließlich folgen weitere zwei Bytes, die die logische Adresse innerhalb des durch den Deskriptor 4 angezeigten 16-kB-Speicherfensters angibt. Die Rücksprunginformationen sind somit 4 Bytes und entsprechen dem Fall 80 von Fig. 8. Nach dem Schreiben der Rücksprunginformationen auf den Stack stellt sich der Stack somit dar, wie es bei 80 in Fig. 8 gezeigt ist. Oben auf dem Stack liegt der Far-Return-Indikator (1 Byte), darunter liegt der Deskriptor für das Far-Segment 62 (Fig. 6). Wieder darunter liegen 2 Bytes, nämlich Byte 1 und Byte 2, die zusammen die logische Adresse in dem durch den Deskriptor bezeichneten Speicherfenster darstellen.

Im nachfolgenden wird anhand von Fig. 4 tabellarisch die Vielfalt der Möglichkeiten unter Verwendung der Sprungbefehle LCALL und FCALL dargestellt. Je nach Ausgangspunkt und Zielpunkt des Sprungs, bzw. der Source und des Targets des Sprungs existieren insgesamt acht Möglichkeiten, die im nachfolgenden dargelegt werden. In Zeile 40 von Fig. 4 ist ein Sprung ohne Fensterwechsel von einem Nicht-Far-Segment in ein Nicht-Far-Segment dargestellt. Dies wäre z. B. ein Sprung von dem durch den Deskriptor 1 bezeichneten logischen Adreßsegment in ein durch den Deskriptor 2 bezeichnetes Segment des logischen Adreßraums. Hier findet keine Speicherumkonfiguration statt, so daß als Rücksprunginformationen 2 Bytes genügen, die die logische Adresse darstellen, an die bei einem Return zurückgesprungen werden muß, um die Sequenz von Befehlen weiter zu bearbeiten. Diese 2 Bytes entsprechen der vorbestimmten Menge an Rücksprunginformationen bzw. den Basisinformationen und sind in Fig. 8 bei 81 dargestellt.

In Zeile 41 ist ein Sprung mit LCALL von dem Far-Segment 62 in eines der Nicht-Far-Segmente 60 dargestellt. Auch hier ist kein Fensterwechsel erforderlich, so daß als Rücksprunginformationen ebenfalls 2 Byte genügen. Dasselbe gilt für die Sprünge in den Zeilen 42 und 43 von Fig. 4. Hier wird beispielsweise mit LCALL von einem Nicht-Far-Segment in ein Far-Segment gesprungen, oder es wird von einem Far-Segment in ein anderes Far-Segment gesprungen.

An dieser Stelle sei darauf hingewiesen, daß der erste Hin-Sprungbefehl LCALL keine Deskriptorenänderung bzw. keinen Fensterwechsel per Definition initiiert, sondern lediglich einen Sprung innerhalb des durch die Deskriptoren 1 bis 4 von Fig. 6B bezeichneten physikalischen Speicherfenster bewirkt.

Für den zweiten Hin-Sprungbefehl FCALL existieren ebenfalls Möglichkeiten. Eine erste Möglichkeit ist in Fig. 4 nicht dargestellt. Hier ist dargestellt, daß mit FCALL von einem Nicht-Far-Segment in ein anderes Nicht-Far-Segment oder in dasselbe Nicht-Far-Segment gesprungen wird. Diese Möglichkeit ist lediglich theoretisch, da per Definition die Deskriptoren in den Nicht-Far-Segmenten fest sind. Sollte der Befehl dennoch implementierbar sein, so würden Rücksprunginformationen von 4 Byte benötigt werden. Wesentlich günstiger ist es jedoch, einen solchen Sprung mit dem Befehl LCALL in Zeile 40 von Fig. 4 durchzuführen.

Eine weitere theoretische Möglichkeit ist ebenfalls nicht dargestellt, nämlich daß mit FCALL von einem Far-Segment in ein Nicht-Far-Segment gesprungen wird. Auch hier würden Rücksprunginformationen von 4 Bytes benötigt werden. Nachdem jedoch in ein Nicht-Far-Segment gesprungen wird, dessen Deskriptor per Definition fest ist, ist auch diese Möglichkeit eher theoretisch, und es wäre wesentlich günstiger, wenn der Befehl LCALL in Zeile 41 benutzt werden würde.

Soll mit FCALL von einem Nicht-Far-Segment in das Far-Segment gesprungen werden (Zeile 47 von Fig. 4), so sind die benötigten 4-Byte-Rücksprunginformationen, wie sie bei 80 in Fig. 8 bezeichnet sind, erforderlich. Obgleich der Ausgangspunkt ein Nicht-Far-Segment ist führt der Befehl FCALL zu einer Änderung des Deskriptors 4. Nachdem eine Deskriptoränderung stattgefunden hat, muß für den Rück-Sprung wieder eine Deskriptor-Restauration durchgeführt werden, und zwar unter Verwendung des in den Rücksprunginformationen gespeicherten "alten" Deskriptors.

Wird von einem Far-Segment in ein anderes Far-Segment mit FCALL gesprungen, so müssen ebenfalls 4 Bytes Rücksprunginformationen auf den Stapel gelegt werden (Zeile 48 von Fig. 4), um bei einem Rück-Sprung wieder in das "alte" Far-Segment zu kommen.

Bei dem in Fig. 4 gezeigten Ausführungsbeispiel zeigt somit der Far-Return-Indikator explizit an, daß ein Sprung mit FCALL ausgeführt worden ist und nicht mit LCALL, da bei einem Sprung mit LCALL niemals ein Far-Return-Indikator in die Rücksprunginformationen aufgenommen wird.

Wesentliche Merkmale des in Fig. 4 gezeigten Ausführungsbeispiels sind, daß Sprünge innerhalb einer Bank bzw. innerhalb der Nicht-Far-Segmente immer mit LCALL ausführbar sind, und daß für jeden Sprung mit LCALL nur 2 Bytes benötigt werden. Im Source-Code wird zwischen FCALL und LCALL unterschieden, was bedeutet, daß weiterhin in Speicherbänken bzw. Speicherfenstern gedacht werden wird.

Vorteilhaft an dem in Fig. 4 gezeigten Ausführungsbeispiel ist ferner, daß hinsichtlich des Stack-Verbrauchs volle Maskenkompatibilität vorherrscht, nämlich dahingehend, daß immer für einen Rück-Sprung entweder 2 Bytes oder 4 Bytes, also 2 mal 2 Bytes benötigt werden.

Dennoch ist bei dem in Fig. 4 gezeigten Ausführungsbeispiel zu bedenken, daß für jeden FCALL-Befehl ein Stack-Verbrauch von 4 Bytes auftritt.

Im nachfolgenden wird anhand von Fig. 5 ein alternatives Ausführungsbeispiel gezeigt, bei dem lediglich für einen Sprung mit FCALL von einem Nicht-Far-Segment in ein Far-Segment 4 Bytes benötigt werden, während bei einem Sprung mit FCALL von einem Far-Segment in ein beliebiges Segment im Gegensatz zu dem in Fig. 4 gezeigten Ausführungsbeispiel lediglich 3 Bytes benötigt werden.

Im einzelnen sind in den Zeilen 50, 51, 52, 53 von Fig. 5 wieder die verschiedenen Möglichkeiten dargestellt, wenn LCALL verwendet wird, während in den Zeilen 56 und 57 die Möglichkeiten dargestellt sind, wenn FCALL verwendet wird. Bei dem in Fig. 5 gezeigten Ausführungsbeispiel ist die Einrichtung 73 zum Decodieren, wie in Verbindung mit Fig. 4 beschrieben auf den Far-Return-Indikator sensitiv und ist die Einrichtung zum Decodieren ferner darauf sensitiv, ob die oberen 2 Byte der Rücksprunginformationen, also die Basisinformationen eine logische Adresse im Far-Segment sind oder nicht.

Insbesondere sind die 3-Byte-Rück-Sprunginformatinen so aufgebaut, wie es bei 82 in Fig. 8 gezeigt ist. Die oberen beiden Bytes Byte 1 und Byte 2 stellen eine logische Adresse im Far-Segment dar, während das dritte Byte der 8-Bit-Deskriptor für das Speicherfenster ist, von dem ausgehend der Sprung mit FCALL oder LCALL durchgeführt worden ist. Für den in Zeile 50 gezeigten Fall, daß von einem Nicht-Far-Segment in ein Nicht-Far-Segment mit LCALL gesprungen wird, ergibt sich nichts besonderes. Es werden lediglich 2 Byte Rücksprunginformationen auf den Stack gelegt, was dem Fall 81 von Fig. 8 entspricht. Wird dagegen mit LCALL von einem Far-Segment in ein Nicht-Far-Segment gesprungen, so müssen die 3 Bytes (Fall 82) an Rücksprunginformationen auf den Stack gelegt werden (Zeile 51). Bei einem Rück-Sprung wird die Einrichtung zum Decodieren nämlich feststellen, daß die oberen 2 Byte der Rücksprunginformationen eine logische Adresse im Far-Segment des logischen Adreßraums darstellen. Die Einrichtung zum Decodieren aktiviert daher die Einrichtung 72 zum Untersuchen, um erneut auf den Stack zuzugreifen, um ein weiteres Byte zu holen.

Wird dagegen aus einem Nicht-Far-Segment in ein Far-Segment mit LCALL gesprungen (Zeile 52), so werden nur 2 Bytes benötigt, da die logische Adresse der Rücksprunginformationen in einem Nicht-Far-Segment liegt. Wird dagegen mit LCALL von einem Far-Segment in ein Far-Segment gesprungen, so werden wieder 3 Bytes benötigt, da die logische Adresse der vorbestimmten Menge an Rücksprunginformationen, also der Basisinformationen, eine logische Adresse im Far-Segment des logischen Adreßraums ist.

Wird dagegen mit FCALL von einem Nicht-Far-Segment in ein Nicht-Far-Segment gesprungen, so werden 4 Bytes an Rücksprunginformationen benötigt (Fall 80 von Fig. 8), da der Befehl FCALL eine Deskriptorenänderung mit sich bringen kann, die wieder restauriert werden muß. Nachdem die logische Adresse des Ausgangspunkts eine Adresse im Nicht-Far-Segment ist, würde die Einrichtung 73 zum Decodieren allein aufgrund des für die Zeilen 50 bis 53 beschriebenen Kriteriums nichts weiter unternehmen. Daher wird als Rücksprunginformationen ferner ein Far-Return-Indikator abgelegt, der der Einrichtung 72 zum Untersuchen zudem signalisiert, daß von dem Speicher nicht nur ein weiteres Byte sondern 2 weitere Byte abgerufen werden müssen, um sämtliche 4 Bytes an Rücksprunginformationen auch zu "verbrauchen".

Wesentlich günstiger kann der Sprung von einem Nicht-Far-Segment in ein Nicht-Far-Segment jedoch mit dem Befehl LCALL in der Konfiguration von Zeile 50 von Fig. 5 ausgeführt werden. Hier werden lediglich 2 Bytes an Stack verbraucht.

In Fig. 5 ist eine weitere eher theoretische Möglichkeit nicht dargestellt, daß nämlich mit FCALL von einem Far-Segment in ein Nicht-Far-Segment gesprungen wird. Nachdem der Deskriptor des Nicht-Far-Segments jedoch per Definition fest ist, derselbe jedoch durch den Befehl FCALL verändert werden würde, ist diese Möglichkeit im normalen Anwendungsfall nicht angezeigt. Es könnte jedoch Möglichkeiten geben, bei denen ausnahmsweise auch ein Deskriptor in einem Nicht-Far-Segment zu verändern ist. Auf jeden Fall wird für den Fall eine Menge von 3 Bytes an Rücksprunginformationen benötigt werden, was wieder dem Fall 82 entspricht. In diesem Fall sind die oberen beiden Bytes der Rücksprunginformationen die logische Adresse eines Far-Segments, was die Einrichtung 73 zum Decodieren von Fig. 7 feststellt und dazu bringt, die Einrichtung 72 zum Untersuchen zu veranlassen, um ein weiteres Byte vom Stack zu holen.

Wird, wie es in Zeile 56 von Fig. 5 dargestellt ist, mit dem Befehl FCALL von einem Nicht-Far-Segment in ein Far-Segment gesprungen, so werden wieder 4 Bytes an Rücksprunginformationen benötigt (Fall 80 von Fig. 8), da die logische Adresse der Rücksprunginformationen keine Adresse im Far-Segment ist und die alleinige Decodierung aufgrund der Far-SegmentAnzeige keinen weiteren Byteabruf vom Stack zur Folge hätte. Daher wird der Far-Return-Indikator benötigt.

Für den Fall eines Sprungs von einem Far-Segment in ein Far-Segment (Zeile 57 von Fig. 5) werden wiederum 3 Bytes benötigt. Im Falle eines Rück-Sprungs wird die Einrichtung 73 zum Decodieren feststellen, daß die logische Adresse des Ausgangspunkts eine Adresse im Far-Segment ist, so daß sie die Einrichtung 72 zum Untersuchen aktiviert, um ein weiteres Byte vom Stack zu holen, um sämtliche 3 Bytes des Falls 82 von Fig. 8 zu verbrauchen.

Anhand von Fig. 5 ist ersichtlich, daß für einen Aufruf aus einem Far-Segment immer 3 Bytes an Rücksprunginformationen benötigt werden, egal ob dieser Aufruf mit LCALL oder FCALL durchgeführt wird, und unabhängig davon, ob ins Far-Segment oder ein Nicht-Far-Segment gesprungen wird. Wie es bei 82 dargestellt ist, wird die logische Adresse der Rücksprunginformation auf den Stapel gelegt, und wird der Deskriptor, also die MMU-Basis-Adresse unterhalb der logischen Adresse im Stack plaziert. Die Unterscheidung, ob Rücksprunginformationen von 2 oder 3 Byte vorliegen, wird dadurch vorgenommen, daß die Einrichtung 73 zum Decodieren feststellt, ob die oberen beiden Byte der Rücksprunginformationen eine logische Adresse im Far-Segment darstellen oder nicht.

Findet ein Aufruf in das Far-Segment mit FCALL statt, so werden, wie es anhand von Fig. 4 dargestellt worden ist, 4 Byte benötigt. Wird dagegen das Far-Segment mit LCALL "betreten", so werden lediglich 2 Bytes benötigt (Zeile 52 von Fig. 5).

Bemerkenswert bei dem in Fig. 5 gezeigten Ausführungsbeispiel ist die Tatsache, daß im Far-Segment jeder Aufruf 3 Bytes kostet.

Je nach Ausführungsform wird das anhand von Fig. 4 gezeigte Ausführungsbeispiel günstiger oder weniger günstig als das anhand von Fig. 5 gezeigte Ausführungsbeispiel sein. Wenn beabsichtigt ist, immer den Befehl FCALL zu verwenden und tatsächlich der physikalische Adreßraum linear bis zu beispielsweise 8 MB adressiert werden soll, dann ist das in Fig. 5 gezeigte Ausführungsbeispiel dahingehend günstiger, daß keine Unterscheidung mehr zwischen FCALL und LCALL durchgeführt werden muß, da lediglich noch der Befehl FCALL verwendet wird. Die Einrichtung 73 zum Decodieren ist ausgebildet, um in diesem Fall je nach Szenario 3 Bytes oder 4 Bytes vom Stack zu holen. Die prinzipiell möglichen Sprünge mit FCALL in ein Nicht-Far-Sgment können einfacher und billiger mit LCALL durchgeführt werden (Zeile 50 und Zeile 51 von Fig. 5). Dennoch hat die Beschränkung lediglich auf die Verwendung von FCALL den Vorteil, daß für den Hin-Sprungbefehl lediglich eine Option besteht und nicht mehr zwischen der einen Option und der anderen Option unterschieden werden muß.

Wenn jedoch möglichst häufig LCALL verwendet wird und nur selten FCALL verwendet wird, so ist zu sehen, daß das in Fig. 4 gezeigte Ausführungsbeispiel im Hinblick auf den Stack-Verbrauch günstiger ist.

Sämtliche Ausführungsbeispiele haben jedoch gemeinsam, daß durch die erfindungsgemäße Codierung der Rücksprunginformationen beim Ausführen eines Hin-Sprungs und durch die entsprechende Decodierung der Rücksprunginformationen bei dem entsprechenden Rück-Sprung eine explizite Unterscheidung, ob ein Sprung ein Sprung ohne Deskriptorenänderung (LCALL) oder ein Sprung mit Deskriptorenänderung (FCALL) war, überflüssig wird. Die erfindungsgemäße Stack-Codierung ermöglicht ferner eine hardwaregesteuerte Unterscheidung von mit FCALL oder LCALL aufgerufenen Funktionen. Dies wird dadurch möglich, daß wie im üblichen Fall immer die gleiche Menge an Rücksprunginformationen vom Stack genommen wird, daß jedoch im Unterschied zum üblichen Fall die vorbestimmte Menge an Rücksprunginformationen nicht einfach als logische Rück-Sprungadresse interpretiert werden, sondern decodiert werden, um festzustellen, ob dies bereits die gesamten Rücksprunginformationen waren (Fall 81 von Fig. 8), ob ein weiteres Byte vom Stack abgerufen werden soll (Fall 82 von Fig. 8), oder öb 2 weitere Bytes vom Stack geholt werden müssen (Fall 80 von Fig. 8), um die korrekte physikalische Adresse ermitteln zu können, auf die nach dem Rück-Sprung zugegriffen werden muß, um die Ausführung der Sequenz von Befehlen fortzusetzen.

In Abweichung von den vorstehend beschriebenen Ausführungsbeispielen ist es ebenfalls möglich, einen Stack mit einer anderen Granularität also 1 Byte zu verwenden. Ferner ist es ebenfalls möglich, als Far-Return-Indikator nicht ein ganzes Byte zu nehmen, sondern lediglich beispielsweise ein einziges Bit, das an einer für den Decodierer bekannten Stelle innerhalb der vorbestimmten Menge an Rücksprunginformationen angeordnet ist, damit der Decodierer untersuchen kann, ob weiter Informationen vom Stack geholt werden müssen (wenn das Bit beispielsweise gesetzt ist), oder ob keine weiteren Informationen vom Stack benötigt werden (wenn das Bit beispielsweise nicht gesetzt ist).

Im Sinne dieser Anmeldung wird unter dem Begriff "Deskriptor" sowohl die Vorrichtung in einer MMU verstanden, in der eine Basisadresse gespeichert werden kann, als auch die in diesem Speicher gespeicherten Informationen, die zur Restaurierung dieser Basisadresse ausreichend sind, wie z. B. die 8 MSBs der Basisadresse oder ein Pointer auf eine Tabelle, in der die Informationen stehen.

### Bezugszeichenliste

- 10: Befehlssequenz
- 10a: Sprungunterprogramm 1
- 10b: Ausführung des Unterprogramms 1
- 10c: Rücksprung zum Hauptprogramm
- 10d: Sprung zum Unterprogramm 2
- 10e: Ausführung eines Teils des Unterprogramms 2
- 10f: Sprung zum Unterprogramm 3
- 10g: Ausführung des Unterprogramms 3
- 10h: Rücksprung zum Unterprogramm 2
- 10i: Ausführung eines Teils des Unterprogramms 2
- 10k: Rücksprung zum Hauptprogramm
- 10l: weitere Befehle
- 10m: Ende des Hauptprogramms
- 20: Befehl einlesen
- 21: Befehl ist LCALL
- 22: Rücksprunginformationen auf den Stack legen
- 23: Zugreifen auf eine physikalische Adresse in demselben physikalischen Speicherfenster
- 24: Befehl einlesen
- 25: Befehl ist FCALL
- 26: Rücksprunginformationen auf den Stack legen
- 27: Zugreifen auf eine physikalische Adresse in einem anderen Speicherfenster
- 30: Befehl einlesen
- 31: Befehl ist Return
- 32: Rücksprunginformationen vom Stack holen
- 33: Basisinformationen decodieren
- 34: Decodieren und erneutes Zugreifen
- 35: Decodieren und kein erneutes Zugreifen
- 40 bis 44: LCALL-Ausführungsbeispiel A
- 47 bis 48: FCALL-Ausführungsbeispiel A
- 50 bis 53: LCALL-Ausführungsbeispiel B
- 56 bis 57: FCALL-Ausführungsbeispiel B
- 60: Nicht-Far-Segmente
- 62: Far-Segment
- 63: Deskriptorzeiger
- 70: Sequenz von Befehlen
- 71: Einrichtung zum Einlesen
- 71a: Leitung für logische Adresse
- 71b: Leitung für physikalische Adresse
- 72: Einrichtung zum Untersuchen
- 72a: Befehl ist LCALL, FCALL
- 72b: Befehl ist Return
- 73: Einrichtung zum Decodieren
- 74: Speicher für Rücksprunginformationen
- 75a: Speicher füllen
- 75b: Speicher leeren
- 76: Steuerleitung zur Aktivierung eines erneuten StackZugriffs
- 80: 4-Byte-Rücksprunginformationen
- 81: 2-Byte-Rücksprunginformationen (Basisinformationen)
- 83: 3-Byte-Rücksprunginformationen

## Patentansprüche

1. Vorrichtung zum Verarbeiten einer Sequenz von Befehlen (70), die an unterschiedlichen Speicheradressen in einem physikalischen Adreßraum gespeichert sind, wobei die Vorrichtung ausgebildet ist, um einen logischen Adreßraum durch eine vorbestimmte Anzahl von logischen Adressen zu adressieren und wobei der physikalische Adreßraum größer als der logische Adreßraum ist, wobei ein Hin-Sprungbefehl (FCALL) eine physikalische Adresse umfaßt, um einen Befehl zu adressieren, der außerhalb des durch den logischen Adreßraum definierten physikalischen Speicherfensters positioniert ist, und wobei ein Rück-Sprungbefehl (Return) vorgesehen ist, um eine durch den Hin-Sprungbefehl begonnene Untersequenz von Befehlen zu beenden, mit folgenden Merkmalen:
einer Einrichtung (71) zum Einlesen eines Befehls der Sequenz von Befehlen;
einer Einrichtung (72) zum Untersuchen des Befehls, wobei die Einrichtung (72) zum Untersuchen ausgebildet ist, um im Falle eines Vorliegens des Hin-Sprungbefehls (FCALL) Rücksprunginformationen zu bestimmen und zu speichern, die sich auf ein gerade aktuelles physikalisches Speicherfenster beziehen, und um im Falle eines Rück-Sprungbefehls (Return) eine vorbestimmte Menge der gespeicherten Rücksprunginformationen wiederzugewinnen; und
einer Einrichtung (73) zum Decodieren der vorbestimmten Menge der gespeicherten Rücksprunginformationen, um festzustellen, ob die vorbestimmte Menge einen Hinweis auf eine physikalische Adresse außerhalb des aktuellen physikalischen Speicherfensters umfaßt, um in einem solchen Fall die Einrichtung (72) zum Untersuchen zu aktivieren (76), um eine weitere Menge der gespeicherten Rücksprunginformationen wiederzugewinnen, um die physikalische Adresse außerhalb des aktuellen physikalischen Speicherfensters für einen Rück-Sprung zu identifizieren.

2. Vorrichtung nach Anspruch 1,
bei der ferner ein weiterer Hin-Sprungbefehl (LCALL) vorgesehen ist, der Informationen für eine logische Adresse umfaßt, um einen Befehl zu adressieren, der in dem durch den logischen Adreßraum definierten physikalischen Speicherfenster positioniert ist,
wobei die Einrichtung (72) zum Untersuchen ausgebildet ist, um im Falle eines Vorliegens des weiteren Hin-Sprungbefehls (LCALL) weitere Rücksprunginformationen zu bestimmen und zu speichern, die sich auf einen gerade aktuellen logischen Adreßraum beziehen, und
wobei die Einrichtung (73) zum Decodieren der vorbestimmten Menge der gespeicherten Rücksprunginformationen ferner ausgebildet ist, um festzustellen, ob die vorbestimmte Menge auf eine für einen Rück-Sprung geeignete logische Adresse in dem aktuellen physikalischen Speicherfenster hinweist.

3. Vorrichtung nach Anspruch 1 oder 2,
bei der die Sequenz von Befehlen ein Hauptprogramm aufweist, wobei das Hauptprogramm einen Aufruf zum Aufrufen eines Unterprogramms (UP1, UP2, UP3) aufweist, und wobei an einem Ende des Unterprogramms eine Rückkehranweisung angeordnet ist, und
bei der die Aufrufanweisung durch den Hin-Sprungbefehl oder den weiteren Hin-Sprungbefehl und die Rückkehranweisung durch den Rück-Sprungbefehl realisierbar sind.

4. Vorrichtung nach Anspruch 2, die ferner folgendes Merkmal aufweist:
eine Speicherverwaltungseinheit zum Umsetzen der Informationen des Hin-Sprungbefehls (FCALL) oder des weiteren Hin-Sprungbefehls (LCALL) in eine physikalische Adresse.

5. Vorrichtung nach Anspruch 4,
bei der die Speicherverwaltungseinheit ausgebildet ist, um einen Deskriptor zu verwenden, der eine physikalische Adresse in einem physikalischen Speicherfenster identifiziert, so daß eine physikalische Adresse unter Verwendung des Deskriptors und einer logischen Adresse in dem logischen Adreßraum ermittelbar ist.

6. Vorrichtung nach Anspruch 5,
bei der die Speicherverwaltungseinheit ausgebildet ist, um für einen logischen Adreßraum zumindest zwei verschiedene Deskriptoren zu verwenden, so daß das durch den logischen Adreßraum definierte physikalische Speicherfenster unzusammenhängende physikalische Speicherbereiche umfaßt, wobei jeder physikalische Speicherbereich einem Segment des logischen Adreßraums zugeordnet ist.

7. Vorrichtung nach Anspruch 6,
bei der ein Segment des logischen Adreßraums als Far-Segment (62) definiert ist, derart, daß nur ein Sprung auf eine logische Adresse in diesem Segment unter Verwendung des Hin-Sprungbefehls (FCALL) zu einem Wechsel des physikalischen Speicherbereichs führt.

8. Vorrichtung nach einem der vorhergehende Ansprüche,
bei der die Informationen über eine physikalische Adresse des Hin-Sprungbefehls (FCALL) eine logische Adresse und einen Deskriptor zum Identifizieren eines physikalischen Speicherbereichs aufweisen.

9. Vorrichtung nach einem der Ansprüche 2 bis 8,
bei der die Einrichtung (72) zum Untersuchen ausgebildet ist, um als Rücksprunginformationen für den weiteren Hin-Sprungbefehl (LCALL) eine logische Adresse zu bestimmen, unter deren Verwendung die Sequenz von Befehlen nach einem Rück-Sprungbefehl fortsetzbar ist.

10. Vorrichtung nach einem der vorhergehenden Ansprüche,
bei der die Einrichtung (72) zum Untersuchen ausgebildet ist, um einen Fensterwechselindikator zu erzeugen und den Rücksprunginformationen für den Hin-Sprungbefehl hinzuzufügen.

11. Vorrichtung nach Anspruch 10,
bei der die Einrichtung (72) zum Untersuchen ausgebildet ist, um zusätzlich zu dem Fensterwechselindikator einen Deskriptor zum Identifizieren eines physikalischen Speicherbereichs sowie eine logische Adresse zu bestimmen, um unter Verwendung der logischen Adresse und des Deskriptors die Sequenz von Befehlen nach einem Rück-Sprungbefehl fortzusetzen.

12. Vorrichtung nach Anspruch 10 oder 11,
bei der der Fensterwechselindikator auf eine oder mehrere vorbestimmte Adressen des logischen Adreßraums hinweist, auf die per Vereinbarung kein Hin-Sprung stattfindet.

13. Vorrichtung nach Anspruch 7,
bei der die Einrichtung (73) zum Decodieren ausgebildet ist, um in dem Fall, in dem die vorbestimmte Menge an Rücksprunginformationen eine logische Adresse in dem Far-Segment ist, die Einrichtung (72) zum Untersuchen zu aktivieren, um weitere Rücksprunginformationen wiederzugewinnen.

14. Vorrichtung nach Anspruch 13,
bei der die Einrichtung (73) zum Decodieren ausgebildet ist, um ferner die Einrichtung (72) zum Untersuchen zu aktivieren, wenn die vorbestimmte Menge einen Fensterwechselindikator aufweist.

15. Vorrichtung nach einem der vorhergehenden Ansprüche,
die ferner einen Stapelspeicher (74) zum Speichern der Rücksprunginformationen aufweist, wobei der Stapelspeicher als Zuletzt-Hinein-Zuerst-Heraus-Speicher organisiert ist.

16. Vorrichtung nach einem der vorhergehenden Ansprüche,
bei der die vorbestimmte Menge der gespeicherten Rücksprunginformationen gleich einer Menge an Informationen ist, die eine logische Adresse in dem logischen Adreßraum darstellen.

17. Vorrichtung nach einem der vorhergehenden Ansprüche,
bei der der logische Adreßraum 64 kByte umfaßt,
bei der eine logische Adresse 2 Bytes umfaßt,
bei der die vorbestimmte Menge 2 Bytes umfaßt, und
bei der die weitere Menge 1 Byte oder mehrere Bytes umfaßt.

18. Verfahren zum Verarbeiten einer Sequenz von Befehlen (70), die an unterschiedlichen Speicheradressen in einem physikalischen Adreßraum gespeichert sind, wobei die Vorrichtung ausgebildet ist, um einen logischen Adreßraum durch eine vorbestimmte Anzahl von logischen Adressen zu adressieren und wobei der physikalische Adreßraum größer als der logische Adreßraum ist, wobei ein Hin-Sprungbefehl (FCALL) eine physikalische Adresse umfaßt, um einen Befehl zu adressieren, der außerhalb des durch den logischen Adreßraum definierten physikalischen Speicherfensters positioniert ist, und wobei ein Rück-Sprungbefehl (Return) vorgesehen ist, um eine durch den Hin-Sprungbefehl begonnene Untersequenz von Befehlen zu beenden, mit folgenden Schritten:
Einlesen (71) eines Befehls der Sequenz von Befehlen;
Untersuchen (72) des Befehls, wobei die Einrichtung (72) zum Untersuchen ausgebildet ist, um im Falle eines Vorliegens des Hin-Sprungbefehls (FCALL) Rücksprunginformationen zu bestimmen und zu speichern, die sich auf ein gerade aktuelles physikalisches Speicherfenster beziehen, und um im Falle eines Rück-Sprungbefehls (Return) eine vorbestimmte Menge der gespeicherten Rücksprunginformationen wiederzugewinnen; und
Decodieren (73) der vorbestimmten Menge der gespeicherten Rücksprunginformationen, um festzustellen, ob die vorbestimmte Menge einen Hinweis auf eine physikalische Adresse außerhalb des aktuellen physikalischen Speicherfensters umfaßt, um in einem solchen Fall die Einrichtung (72) zum Untersuchen zu aktivieren (76), um eine weitere Menge der gespeicherten Rücksprunginformationen wiederzugewinnen, um die physikalische Adresse außerhalb des aktuellen physikalischen Speicherfensters für einen Rück-Sprung zu identifizieren.

## Claims

1. Apparatus for processing a sequence of instructions (70), which are stored at different memory addresses in a physical address space, wherein the apparatus is formed to address a logical address space by a predetermined number of logical addresses, and wherein the physical address space is larger than the logical address space, wherein a jump instruction (FCALL) comprises a physical address to address an instruction, which is positioned outside of a physical memory window defined by the logical address space, and wherein a re-jump instruction (return) is provided to terminate a sub-sequence of instructions started by the jump instruction, comprising:
means (71) for reading in an instruction of the sequence of instructions;
means (72) for examining the instruction, wherein the means (72) for examining is formed to determine and store re-jump information in the case of the presence of the jump instruction (FCALL), which refer to the presently current physical memory window, and to retrieve a predetermined amount of the stored re-jump information in the case of a re-jump instruction (return); and
means (73) for decoding the predetermined amount of stored re-jump information to determine whether the predetermined amount comprises a reference to a physical address outside of a current physical memory window, to activate the means (72) for examining (76) in such a case, to retrieve another amount of the stored re-jump information to identify the physical address outside of a current physical memory window for a re-jump.

2. Apparatus according to claim 1,
wherein further another jump instruction (LCALL) is provided, which comprises information for a logical address, to address an instruction, which is positioned in the physical memory window defined by the logical address space,
wherein the means (72) for examining is formed to determine and store further re-jump information in the case of the presence of another jump instruction (LCALL), which refer to a presently current logical address space, and
wherein the means (73) for decoding the predetermined amount of the stored re-jump information is further formed to determine whether the predetermined amount refers to a logical address in the current physical memory window which is suitable for a re-jump.

3. Apparatus according to claim 1 or 2,
wherein the sequence of instructions comprises a main program, wherein the main program comprises a call for calling a sub-program (UP1, UP2, UP3), and wherein a return instruction is disposed at the end of the sub-program, and
wherein the call instruction can be realized by the jump instruction or the further instruction and the return instruction by the re-jump instruction.

4. Apparatus according to claim 2, further comprising:
a memory management unit for converting the information of the jump instruction (FCALL) or the further jump instruction (LCALL) into a physical address.

5. Apparatus according to claim 4,
where the memory management unit is formed to use a descriptor, which identifies a physical address in the physical memory window, so that a physical address can be determined by using the descriptor and a logical address in the logical address space.

6. Apparatus according to claim 5,
wherein the memory management unit is formed to use at least two different descriptors for a logical address space, so that the physical memory window defined by the logical address space comprises uncontiguous physical memory areas, wherein every physical memory area is associated to a segment of the logical address space.

7. Apparatus according to claim 6,
wherein one segment of the logical address space is defined as a Far segment (62), such that only a jump to a logical address in this segment leads to a change of the memory area by using the jump instruction (FCALL).

8. Apparatus according to one of the previous claims,
wherein the information about a physical address of the jump instruction (FCALL) comprises a logical address and a descriptor for identifying a physical memory area.

9. Apparatus according to one of claims 2 to 8,
wherein the means (72) for examining is formed to determine a logical address as re-jump information for the further jump instruction (LCALL), by using which the sequence of instructions can be continued after a re-jump instruction.

10. Apparatus according to one of the previous claims,
wherein the means (72) for examining is formed to generate a window change indicator and to add it to the re-jump information for the jump instruction.

11. Apparatus according to claim 10,
wherein the means (72) for examining is formed to determine a descriptor for identifying a physical memory area as well as a logical address, in addition to the window change indicator, to continue the sequence of instructions after a re-jump instruction by using the logical address and the descriptor.

12. Apparatus according to claim 10 or 11,
wherein the window change indicator refers to one or several predetermined addresses of the logical address space, to which no jump takes place by definition.

13. Apparatus according to claim 7,
wherein the means (73) for decoding is formed to activate the means (72) for examining to retrieve further region information, in the case where the predetermined amount of re-jump information is a logical address in the Far segment.

14. Apparatus according to claim 13,
wherein the means (73) for decoding is formed to further activate the means (72) for examining, when the predetermined amount comprises a window change indicator.

15. Apparatus according to one of the previous claims,
which further comprises a stack memory (74) for storing the re-jump information, wherein the stack memory is organized as first-in-first-out memory.

16. Apparatus according to one of the previous claims,
wherein the predetermined amount of the stored re-jump information is equal to an amount of information, which represent a logical address in the logical address space.

17. Apparatus according to one of the previous claims,
wherein the logical address space comprises 64 kByte,
wherein a logical address comprises 2 bytes,
wherein the predetermined amount comprises 2 bytes, and
wherein the further amount comprises 1 byte or several bytes.

18. Method for processing a sequence of instructions (70), which are stored at different memory addresses in a physical address space, wherein the apparatus is formed to address a logical address space by a predetermined number of logical addresses, and wherein the physical address space is larger than the logical address space, wherein a jump instruction (FCALL) comprises a physical address to address an instruction, which is positioned outside of a physical memory window defined by the logical address space, and wherein a re-jump instruction (return) is provided, to terminate a sub-sequence of instructions started by the jump instruction, comprising:
reading-in (71) an instruction of the sequence of instructions;
examining (72) the instruction, wherein the means (72) for examining is formed to determine and store re-jump information in the case of the presence of a jump instruction (FCALL), which refers to a presently current physical memory window, to retrieve a predetermined amount of the stored re-jump information in the case of a re-jump instruction (return); and
decoding (73) the predetermined amount of the stored re-jump information, to determine whether the predetermined amount comprises a reference to a physical address outside of a current physical memory window, to activate the means (72) for examining in such a case (76), to retrieve a further amount of the stored re-jump information to identify the physical address outside of a current physical memory window for a re-jump.

## Revendications

1. Dispositif de traitement d'une séquence d'instructions (70) qui sont mémorisées à des adresses de mémoires différentes dans un espace d'adresses physique, le dispositif étant constitué pour adresser un espace d'adresses logiques par un nombre déterminé à l'avance d'adresses logiques et l'espace d'adresses physiques étant plus grand que l'espace d'adresses logiques, une instruction (FCALL) à saut vers l'avant comprenant une adresse physique pour adresser une instruction qui est positionnée en dehors de la fenêtre de mémoire physique définie par l'espace d'adresses logiques et une instruction à saut en arrière (return) étant prévue pour mettre fin à une sous-séquence d'instructions, commencée par l'instruction à saut en avant, comprenant les caractéristiques suivantes :
un dispositif (71) de lecture d'une instruction de la séquence d'instructions ;
un dispositif (72) d'étude de l'instruction, le dispositif (72) d'étude étant constitué pour déterminer et mémoriser dans le cas d'une présence de l'instruction (FCALL) à saut en avant, des informations à saut en arrière qui se rapportent à une fenêtre de mémoire physique précisément actuelle et pour récupérer dans le cas d'une instruction à saut en arrière (return), une quantité déterminée à l'avance des informations à saut en retour mémorisées ; et
un dispositif (73) de décodage de la quantité déterminée à l'avance des informations à saut en retour mémorisées, pour constater si la quantité déterminée à l'avance comprend une indication d'une adresse physique en dehors de la fenêtre de mémoire physique actuelle, pour activer (76) dans un cas de ce genre le dispositif (72) d'étude, pour récupérer une quantité supplémentaire des informations à saut en retour mémorisées, pour identifier l'adresse physique en dehors de la fenêtre de mémoire physique actuelle, pour un saut en retour.

2. Dispositif suivant la revendication 1,
dans lequel il est prévu, en outre une instruction (LCALL), à saut en avant supplémentaire, qui comprend des informations pour une adresse logique, pour adresser une instruction qui est positionnée dans la fenêtre de mémoire physique définie par l'espace d'adresses logiques,
dans lequel le dispositif (72) d'étude est constitué, pour déterminer et pour mémoriser dans le cas d'une présence de l'instruction (LCALL) à saut en avant supplémentaire, des instructions à saut en retour supplémentaires qui se rapportent à un espace d'adresses logiques précisément actuel, et
dans lequel le dispositif (73) de décodage de la quantité déterminée à l'avance d'informations à saut en retour mémorisées est en outre constitué pour constater si la quantité déterminée à l'avance indique une adresse logique appropriée pour un saut en retour dans la fenêtre de mémoire physique actuelle.

3. Dispositif suivant la revendication 1 ou 2,
dans lequel, la séquence d'instructions comporte un programme principal, le programme principal ayant un appel pour appeler un sous-programme (UP1, UP2, UP3) et une indication de retour étant disposée à une extrémité du sous-programme, et
dans lequel l'indication d'appel peut être réalisée par l'instruction de saut en avant ou par l'instruction supplémentaire de saut en avant et l'indication de retour peut être réalisée par l'indication de saut en retour.

4. Dispositif suivant la revendication 2 qui a en outre la caractéristique suivante :
une unité de gestion de mémoire pour transformer les informations de l'instruction (FCALL) de saut en avant ou de l'instruction (LCALL) de saut en avant supplémentaire en une adresse physique.

5. Dispositif suivant la revendication 4 dans lequel,
l'unité de gestion de mémoire est constituée pour utiliser un descripteur, qui identifie une adresse physique dans une fenêtre de mémoire physique, de façon à pouvoir déterminer une adresse physique en utilisant le descripteur et une adresse logique dans l'espace d'adresses logiques.

6. Dispositif suivant la revendication 5 dans lequel,
l'unité de gestion de mémoire est constituée pour utiliser pour un espace d'adresses logiques, au moins deux descripteurs différents, de sorte que la fenêtre de mémoire physique définie par l'espace d'adresses logiques comprend des zones de mémoires physiques qui ne sont pas rattachées, un segment de l'espace d'adresses logiques étant associé à chaque zone de mémoire physique.

7. Dispositif suivant la revendication 6 dans lequel,
un segment de l'espace d'adresses logiques est défini comme étant un segment (62) lointain, de sorte que seulement un saut sur une adresse logique dans ce segment, en utilisant l'instruction (FCALL) de saut en avant, entraîne un changement de la zone de mémoire physique.

8. Dispositif suivant l'une des revendications précédentes,
dans lequel, les informations sur une adresse physique de l'instruction (FCALL) à saut en avant comportent une adresse logique et un descripteur pour identifier une zone de mémoire physique.

9. Dispositif suivant l'une des revendications 2 à 8,
dans lequel le dispositif (72) d'étude est constitué pour déterminer, en tant qu'informations de saut en arrière pour l'instruction (LCALL) à sauts en avant supplémentaire, une adresse logique par l'utilisation de laquelle la séquence d'instructions peut se poursuivre après une instruction de saut en arrière.

10. Dispositif suivant l'une des revendications précédentes
dans lequel, le dispositif (72) d'étude est constitué pour produire un indicateur de changement de fenêtre et pour l'ajouter aux informations de retour pour l'instruction de saut en avant.

11. Dispositif suivant la revendication 10,
dans lequel un dispositif (72) d'étude est constitué pour déterminer en plus de l'indicateur de changement de fenêtre un descripteur pour identifier une zone de mémoire physique, ainsi qu'une adresse logique pour poursuivre, en utilisant l'adresse logique et le descripteur, la séquence d'instructions après une instruction de saut en arrière.

12. Dispositif suivant larevendication 10 ou 11,
dans lequel l'indicateur de changement de fenêtre indique une ou plusieurs adresses déterminées à l'avance de l'espace d'adresses logiques, sur laquelle ou sur lesquelles il ne peut pas se produire par convention de saut en avant.

13. Dispositif suivant la revendication 7
dans lequel le dispositif (73) de décodage est constitué pour activer, dans le cas dans lequel la quantité déterminée à l'avance d'informations de sauts en arrière est une adresse logique dans le segment lointain, le dispositif (72) d'étude pour récupérer des informations de saut en arrière supplémentaires.

14. Dispositif suivant la revendication 13,
dans lequel le dispositif (73) de décodage est constitué pour activer en outre le dispositif (72) d'étude, lorsque la quantité déterminée à l'avance comporte un indicateur de changement de fenêtre.

15. Dispositif suivant l'une des revendications précédentes,
qui comprend en outre, une mémoire (74) de pile pour mémoriser les informations en retour, la mémoire de pile étant organisée en mémoire dernier entré, dernier sortie.

16. Dispositif selon l'une des revendications précédentes,
dans lequel la quantité déterminée à l'avance des informations de saut en arrière mémorisées est égale à une quantité d'informations qui représentent une adresse logique dans l'espace d'adresses logiques.

17. Dispositif suivant l'une des revendications précédentes,
dans lequel l'espace d'adresses logiques comprend 64 k-octets,
dans lequel une adresse logique comprend 2 octets,
dans lequel la quantité déterminée à l'avance comprend 2 octets, et
dans lequel la quantité supplémentaire comprend 1 octet ou plusieurs octets.

18. Procédé de traitement d'une séquence d'instructions (70), qui sont mémorisées à des adresses de mémoire différentes dans un espace d'adresses physiques, le dispositif étant constitué pour adresser un espace d'adresses logiques par un nombre déterminé à l'avance d'adresses logiques et l'espace d'adresses physiques étant plus grand que l'espace d'adresses logiques, une instruction (FCALL) de saut en avant comprenant une adresse physique, pour adresser une instruction qui est positionnée à l'extérieur de la fenêtre de mémoire physique définie par l'espace d'adresses logiques et il est prévu une instruction de saut en arrière pour mettre fin à une sous-séquence d'instructions commencée par l'instruction de saut en avant, comprenant les stades suivants,
lecture (71) d'une instruction de la séquence d'instructions ;
étude (72) de l'instruction, le dispositif (72) d'étude étant constitué pour déterminer et mémoriser, dans le cas d'une présence de l'instruction (FCALL) à saut en avant, des informations à saut en arrière, qui se rapportent à une fenêtre de mémoire physique précisément actuelle et pour récupérer, dans le cas d'une instruction à saut en arrière (return), une quantité déterminée à l'avance des informations à saut en retour mémorisées ; et
décodage (73) de la quantité déterminée à l'avance d'informations de saut en arrière mémorisées pour constater si la quantité déterminée à l'avance comprend une indication d'une adresse physique en dehors de la fenêtre de mémoire physique actuelle, pour activer (76) dans un cas de ce genre le dispositif (72) d'étude pour récupérer une quantité supplémentaire des informations à saut en arrière mémorisées, pour identifier l'adresse physique en dehors de la fenêtre de mémoire physique actuelle pour un saut en arrière.
